# EUROPEAN PATENT SPECIFICATION

(11) **EP 2 488 052 B1**
(45) Date of publication and mention of the grant of the patent: **04.06.2014**
(21) Application number: 10768583.6
(22) Date of filing: 05.10.2010
(51) Int. Cl.: A23L 1/00, A23L 1/10, A23L 1/22, A23L 1/40, A23L 2/39, A23P 1/04

(54) **Solid capsules comprising ethanol, a carbohydrate, a salt and a coating provided by a powdering agent, process for preparing said capsules by spray-drying**
Feste Kapseln mit Ethanol, ein Kohlenhydrat, ein Salz und eine Beschichtung bestehend aus ein pulverförmiges Agens, Verfahren zur Herstellung der Kapseln durch Sprühtrocknung
Capsules solides comportant de l'éthanol, un carbohydrate, un sel et un enrobage comprenant un agent pulvérulent, procédé pour la préparation des capsules par atomisation

(30) Priority: 14.10.2009 EP 09173056
(43) Date of publication of application: 22.08.2012
(73) Proprietor: Firmenich S.A., 1211 Geneva 8 (CH)
(72) Inventor: MEYER, François, CH-1211 Geneva 8 (CH); SCHLEIFENBAUM, Birgit, CH-1211 Geneva 8 (CH); SUBRAMANIAN, Srinivasan, Plainsboro 08536 (US)
(74) Representative: Carina, Riccardo Filippo
(86) International application number: PCT/IB2010/054487
(87) International publication number: WO 2011/045706

(56) References cited:
- WO-A2-2007/135583
- GB-A- 1 370 815
- GB-A- 2 110 235
- US-A- 3 795 747

## Description

### Technical Field

The present invention relates to a method for the preparation of solid capsules comprising ethanol. The invention further relates to solid capsules comprising ethanol as such, to products containing them and to a method for improving the storage stability of solid capsules comprising ethanol.

### Prior art

Encapsulation of ethanol in solid particles is highly desirable when ethanol is intended to be mixed with other ingredients in solid form, in particular for the preparation of products such as food and beverages or of perfumed products, which are in the form of a dry powder.

Now, the numerous advantageous properties of capsules in these fields are opposed to other properties that must be taken into account during their preparation, transportation, storage and handling. In fact, such delivery systems, due to their nature, and in particular to the fact that they encapsulate ethanol, which is a volatile and flammable substance, constitute combustible dusts which can, when dispersed in air or another oxygen-containing gas, form readily ignitable mixtures. When ignited by a sufficiently powerful ignition source, the result is a rapid combustion reaction with advancing pressure and flame front.

This issue becomes important during the preparation of capsules. In particular, spray-drying and fluidised-bed encapsulation processes are highly concerned by this issue, as they are both based on the use of an equipment wherein particles are suspended in hot air as fine particles and can therefore undergo explosion during their preparation. It is therefore desirable to reduce such explosion hazard.

In addition, it is highly desirable to provide capsules having a relatively high load of ethanol and being free flowing, so as not to form aggregates. It is further preferred that these capsules remain stable and free-flowing at room temperature and standard humidity over a period of several months without forming aggregates.

Solid capsules encapsulating ethanol are already known from the prior art. For example, US 3,786,159 describes the preparation of capsules from a mixture of alcohol, water and a water-soluble material, which is spray-dried. The water-soluble material may be gelatine or one or more modified starches which are easily water-soluble.

US 4,454,165 describes alcohol-containing powders prepared by mixing a hydrolyzed starch comprising at least 50% of oligosaccharides having a glucose polymerization degree of up to 8 and up to 10% of saccharides having a glucose polymerization degree of up to 2 in an alcohol containing aqueous solution and spray-drying the resulting liquid mixture.

US 5,961,707 describes a process for the preparation of alcohol-containing granules by encapsulation using dextrins, which is substantially independent of the glucose polymerization degree of the dextrin used, the granules being prepared by a fluidized-bed spray granulation of a solution of dextrins in a water/alcohol mixture.

These documents do not disclose the production of capsules with a low risk of explosion. They also do not disclose capsules encapsulating high amounts of ethanol and which remain free-flowing for several months. Therefore, there remains a need to address these problems.

### Summary of the Invention

Accordingly, the invention relates to a process for preparing solid capsules comprising ethanol, the process comprising the steps of :
a) mixing a salt with ethanol, water and a carbohydrate to form an aqueous solution, suspension or emulsion;
b) dispersing the solution, suspension or emulsion obtained in step a) in the form of drops into a spraying tower,
c) introducing before, during and/or after step b) a powdering agent into the spraying tower so as to contact the powdering agent with the drops of the dispersed solution, suspension or emulsion to obtain a coating of powdering agent at the surface of the drops,
d) supplying a hot gas at a temperature comprised between 130 and 250°C into the spraying tower, and,
e) removing the solid powdering agent coated capsules from the spraying tower, wherein the salt is selected from citrate, phosphate, chlorate, sulphate or acetate salts of potassium, sodium or calcium, as claimed.

In the context of the present invention, "solid capsules" means capsules which have a solid wall, the encapsulated part being either solid or liquid.

The invention further provides solid capsules comprising ethanol, a carbohydrate, a salt and a coating provided by a powdering agent, wherein the salt is selected from citrate, phosphate, chlorate, sulphate or acetate salts of potassium, sodium or calcium.

In another aspect the invention provides a product comprising the solid capsules of the invention.

In a fourth aspect it provides a method for increasing the storage stability of solid capsules comprising ethanol, the method comprising the steps of :
a) mixing a salt with ethanol, water and a carbohydrate to form an aqueous solution, suspension or emulsion,
b) dispersing the aqueous solution, suspension or emulsion obtained in step a) in the form of drops into a spraying tower,
c) introducing before, during and/or after step b) a powdering agent into the spraying tower so as to contact the powdering agent with the drops of the dispersed aqueous solution, suspension or emulsion to obtain a coating of powdering agent at the surface of the drops,
d) supplying a hot gas at a temperature comprised between 130 and 250°C into the spraying tower, and,
e) removing the powdering agent coated solid capsules from the spraying tower, wherein the salt is selected from citrate, phosphate, chlorate, sulphate or acetate salts of potassium, sodium or calcium, as claimed.

### Detailed description of the invention

The process of the present invention comprises the step of mixing a salt with ethanol, water and a carbohydrate to form an aqueous solution, suspension or emulsion.

The use of a salt in the preparation of the aqueous solution, suspension or emulsion is advantageous. A first beneficial effect of the use of a salt is that of reducing the risk of explosion when the solution, suspension or emulsion is dried under the effect of a hot gas to form solid capsules. A second beneficial effect is that of increasing the storage stability of the so obtained solid capsules by preventing the capsules from forming aggregates.

The salt is preferably present in an amount comprised between 3 and 3.5% by weight, relative to the total weight of the solution, suspension or emulsion. Such amount corresponds to concentrations comprised between 4 and 5% by weight, relative to the dry weight of the capsules. Concentrations of at least 3% have the advantage of reducing the risk of explosion. On the other hand preferred concentrations of at most 3.5% are advantageous in that phase separation of ethanol is avoided.

The amount of salt is preferably fine-tuned, depending on the amount of ethanol present in the solution, suspension or emulsion. The highest concentrations of salt can be used with the lowest concentrations of ethanol, with optimal mitigation of dust exposivity of dried powder. However, when the ethanol content is increased, the concentration of salt has to be reduced in order to avoid phase separation. This results in slightly higher risk of explosion. Typically, when the alcohol content in the solution, suspension or emulsion is of 25%, then salt content is preferably limited to concentrations of at most 3.1% by weight, relative to the total weight of the solution, suspension or emulsion, whereas when the alcohol content is below 20%, then salt concentrations ranging between 3.4 and 3.5% can be used without any adverse effect.

The capsules of the invention encapsulate either ethanol as such or an alcoholic composition. For instance the capsules may contain a flavour composition comprising ethanol or an alcoholic beverage. In particular, a wine, a beer or a spirit can be encapsulated using the process of the present invention. The capsules may also contain perfuming compositions containing ethanol.

The amount of ethanol in the solution, suspension or emulsion is preferably comprised between 18 and 25% by weight, relative to the total weight of the solution, suspension or emulsion. The amount of ethanol is preferably limited to 25% to reduce the risk of explosion and avoid phase separation of ethanol. This corresponds to final ethanol loads in the range of 20-40 %, preferably 25-38 % and more preferably 27-35 % by weight, relative to the total weight of the dry capsules.

Flavouring and/or perfuming ingredients may further be added to the alcohol or alcoholic composition. For the purpose of the present invention, flavouring and/or perfuming ingredients encompass flavour and fragrance ingredients or compositions of current use in the flavour and/or fragrance industry, of both natural and synthetic origin. It includes single compounds and mixtures. Specific examples of such flavour ingredients may be found in the current literature, e.g. in Fenaroli's Handbook of flavour ingredients, 1975, CRC Press; Synthetic Food adjuncts, 1947 by M.B. Jacobs, edited by Van Nostrand; or Perfume and Flavor Chemicals by S. Arctander, 1969, Montclair, New Jersey (USA). Many other examples of current flavouring and/or perfuming ingredients may be found in the patent and general literature available. The flavouring and/or perfuming ingredients may be present in the form of a mixture with solvents, adjuvants, additives and/or other components, generally those of current use in the flavour and fragrance industry.

"Flavouring ingredients" are well known to a person skilled in the art of aromatising as being capable of imparting a flavour or taste to a consumer product, or of modifying the taste and/or flavour of said consumer product, or yet its texture or mouthfeel.

By "perfuming ingredients" it is understood here compounds which are used as active ingredients in perfuming preparations or compositions in order to impart a hedonic effect when applied on a surface. In other words, such compounds, to be considered as being perfuming ones, must be recognized by a person skilled in the art of perfumery as being able to impart or modify in a positive or pleasant way the odor of a composition or of an article or surface, and not just as having an odor. Moreover, this definition is also meant to include compounds that do not necessarily have an odor but are capable of modulating the odor of a perfuming composition, perfumed article or surface and, as a result, of modifying the perception by a user of the odor of such a composition, article or surface. It also contains malodour counteracting ingredients and compositions. By the term "malodor counteracting ingredient" we mean here compounds which are capable of reducing the perception of malodor, i.e. of an odor that is unpleasant or offensive to the human nose by counteracting and/or masking malodors. In a particular embodiment, these compounds have the ability to react with key compounds causing known malodors. The reactions result in reduction of the malodor materials' airborne levels and consequent reduction in the perception of the malodor.

Diverse types of carbohydrates can be used in the process of the invention.

The most preferred carbohydrate is a mixture of hydrolyzed starch comprising at least 50% of oligosaccharides having a glucose polymerization degree of up to 8 and up to 10% of saccharides having a glucose polymerization degree of up to 2, these percentages being relative to the total weight of the solution suspension or emulsion.

The carbohydrate is preferably used in an amount comprised between 41.5 and 59%, preferably between 42 and 50% by weight, relative to the total weight of the solution, suspension or emulsion. It is preferable to use concentrations of at most 59% so as to limit the necessary amount of water and thus achieve a higher ethanol load. The lowest value of the preferred concentration range for carbohydrate is determined by the preferred highest concentration described above for ethanol. The amount of carbohydrate in the dry capsules is preferably comprised between 55 and 76%, more preferably between 60 and 75% by weight, relative to the total weight of the dry capsules.

Water is preferably added in an amount comprised between 20-30% by weight, relative to the total weight of the solution, suspension or emulsion. The amount of water is preferably maintained as low as possible in order to avoid excessive energy consumption during drying and therefore to reduce processing costs. However, it is preferred to use concentrations of water of at least 20% to reduce the solution, suspension or emulsion viscosity.

The above-mentioned ingredients are mixed in the form of an aqueous solution, suspension or emulsion. When no hydrophobic component such as flavours or fragrances are present, the above-mentioned ingredients are preferably mixed in the form of a single phase aqueous solution wherein the salt, the carbohydrate and ethanol are completely dissolved and do not phase separate. In order to form the solution, suspension or emulsion, the carbohydrate and salt are mixed with water and with ethanol or the alcoholic solution by dissolving it, by suspending it or by emulsifying it therein.

According to a preferred aspect of the process of the present invention, the solution, suspension or emulsion comprising the carbohydrate, ethanol, water and the salt has a dry matter content in the range of 45-62 %, preferably 45-55 % by weight, relative to the total weight of the solution, suspension or emulsion. The relatively high dry-matter content provides a high viscosity emulsion, the latter possibly presenting difficulties in handling and guidance into the spraying tower. On the other hand, thanks to a high dry-matter content, the drying process becomes more efficient as less water needs to be evaporated. Unlike in conventional spray drying, where the emulsion viscosity needs to be low enough to produce fine droplets having a diameter of generally less than 150 µm, the present invention enables the preparation of comparatively large drops that can be dried successfully and efficiently. In this case, it is not necessary for the emulsion to have a low viscosity, so that, compared to conventional spray drying, higher viscosities may be used.

The solution, suspension or emulsion is dispersed in the form of drops into a spraying tower.

Any device capable of dispersing the solution, suspension or emulsion in the form of drops can be used to carry out the dispersion step. For instance, the solution, suspension or emulsion can be guided through a spraying nozzle or through a centrifugal wheel disk into the spraying tower. Vibrated orifices may also be used.

The size of the capsules is determined by the size of the drops that are dispersed into the tower. If a spraying nozzle is used for dispersing the drops the size may be controlled by the flow rate of an atomising gas through the nozzle, for example. In the case where a centrifugal wheel disk is used for dispersal, the main factor for adjusting droplet size is the centrifugal force with which the drops are dispersed from the disk into the tower. The centrifugal force, in turn, depends on the speed of rotation and the diameter of the disk. The feed flow rate of the emulsion, its surface tension and, as stated above, its viscosity are also parameters controlling the final drop size and size distribution. By adjusting these parameters, the skilled person can control the size of the drops of the emulsion to be dispersed in the tower.

Typically, the capsules produced according to the present invention have an average diameter in the range of 10 to 2000 µm, preferably in the range of 150-300 µm. The size of the dispersed drops is therefore preferably adjusted accordingly.

The present invention comprises a step of introducing a powdering agent into the spraying tower to obtain a coating of powdering agent on the drops of the sprayed emulsion. This step has the beneficial effect of providing free-flowing capsules with good storage stability. The effect is even enhanced by the combination of the presence of a salt in the solution, suspension or emulsion, as stated above, and of the coating with a powdering agent.

According to a preferred aspect of the invention, the powdering agent is selected from the group consisting of starch, starch derivatives, talc, bentonite, silicon dioxide, calcium, magnesium, aluminium or potassium silicates, sodium, potassium or calcium aluminosilicates, calcium, sodium, or magnesium carbonates, calcium or magnesium phosphates, ferric ammonium citrate, microcrystalline cellulose and cellulose derivatives or fibers, aluminium, calcium, sodium, magnesium, potassium or ammonium salts of fatty acids, magnesium oxides and mixtures comprising two or more of the aforementioned powdering agents. The purpose of the powdering agent is to prevent the dispersed drops from attaching to each other and/or to the inner walls of the spraying tower. The powdering agent is thus contacted with the drops of the solution, suspension or emulsion in the tower and creates a coating on the dispersed drops as soon as they are contacted with the powdering agent. Accordingly, in a preferred aspect of the invention, particles of the powdering agent are introduced into the spraying tower and circulate from an inlet to an outlet of the spraying tower. For instance, the outlet may also be the outlet of the hot gas.

In order to be contacted with the sprayed droplets, the powdering agent and the sprayed droplets are present in the tower together. For instance, the powdering agent can be already present in the tower when the droplets are sprayed, the powdering agent may be introduced simultaneously with the spraying of the droplets and/or it can even be introduced once the droplets have been sprayed, provided that the droplets are still present in the tower.

The powdering agent may be recycled. For instance, it can be recycled in a recycling unit collector from which it may be redirected by a powdering agent return pipe to the inlet into the spraying tower. Preferably, the powdering agent circulates at least in part in counter current with the dispersed drops. Accordingly, in a preferred aspect of the invention, the powdering agent that is not absorbed on the dispersed capsules exits the spraying tower together with the hot gas through an outlet of exhaust gas, which leads to a unit capable of separating the hot gas from the powdering agent, the powdering agent being then re-introduced into the spraying tower. There is thus a continuous circulation of powdering agent from the recycling unit to the spraying tower and back to the recycling unit. For example, the recycling unit may be a cyclone or a filter bag house.

Generally, the contribution of the powdering agent to the total weight of the capsules may be comprised between 0.1 and 30%, preferably between 0.1 and 27 %, preferably between 0.5 and 25 %, more preferably between 1 and 20 % and most preferably between 1 and 10 % by weight, relative to the total weight of the dry capsules. Most advantageously, the amount of powdering agent makes up not more than 10% by weight of the total weight of the capsules. The use of higher amounts of powdering agent would disadvantageously result in a lower amount of encapsulated ethanol, whereas lower amount of powdering agent would be insufficient to obtain free-flowing capsules.

The method of the present invention comprises the essential step of supplying a hot gas into the spraying tower while the droplets are present. The temperature of the hot gas has to be sufficient for at least superficially drying the capsules. For example, the hot gas may be supplied at a temperature comprised in the range of 130-250°C.

According to a preferred aspect of the invention, the hot gas supplied into the drying tower has a temperature in the range of 135-220°C, preferably 140-210°C, and most preferably 140-170°C.

The hot gas may be any inert gas such as air or nitrogen, for example.

The supply of hot gas through a hot gas inlet results in a temperature in the spraying tower in the range of about 180 to about 50°C, preferably about 170°C to about 40°C. The temperature in the tower follows a gradient, with the highest temperature at the hot gas inlet, which thus provides a high temperature at the place where the drops of the solution, suspension or emulsion are dispersed. At the bottom of the tower the temperature is much lower, due to the evaporation of water from the dispersed drops.

The method of the invention also comprises the step of removing the capsules coated with powdering agent from the spraying tower.

The method of the invention may comprise the further optional step of intercepting the capsules by a fluidised bed after being coated by the powdering agent and after being at least superficially dried by the hot gas in the spraying tower.

Preferably, the fluidised bed is supplied with a gas having a temperature in the range of 40 to about 100°C, meaning that gas having a temperature in this range is supplied from below the bed through small apertures to fluidise and/or intercept the capsules. Preferably, the temperature of the gas is in the range of 65 to 90°C. Generally, the gas is air. Similarly to the spraying zone, the method of the present invention again provides for comparatively high temperatures in the fluidised bed in view of the prior art.

The method of the present invention may be performed in any conventional spraying tower such as described in WO 2004/062382 (page 2, lines 26-35), for example.

A conventional multi-stage drying apparatus can be used for conducting the steps of the process of the present invention. A multi-stage drying apparatus comprises a spray drying tower, and, at the bottom of the tower, a fluidised bed intercepting partially dried particles which have fallen from the tower. In a typical multi-stage drier, an air inlet and an air outlet are situated in the upper region of the tower. Generally, it is also possible to maintain a powdering agent, as defined above, in the spraying tower. The powdering agent is generally introduced by a separate inlet that may preferably be situated either close to the inlet of the aqueous solution, suspension or emulsion or in the lower part of the drying tower. The powdering agent is, in the operation mode, in constant movement and may exit the tower together with the air outlet.

The present invention thus provides a new utility of classic multi stage spray driers and, in addition enables the preparation of relatively large-sized capsules according to the method herein disclosed with a non-specialised equipment. The use of such a multistage dryer enlarges the encapsulation possibilities. Accordingly, in preferred aspect, the invention provides a method which is conducted in a multi stage drying apparatus.

The method of the present invention may be carried out batch-wise or continuously. In a batch-wise operation of a multi-stage drier, there is an exit at the level of the fluidised bed leading to a collecting vessel. By switching off the fluidised bed and opening the valve leading to the collecting vessel, capsules are guided, for example by gravity, to the collecting vessel, from where they may be removed. However, the method of the invention is preferably performed continuously, for example by conveying the granules from the integrated fluidised bed to an external, additional fluidised bed where the capsules may be further dried to accurately control their final moisture content.

The capsules obtained by the process of the present invention are preferably classified in St-class 1. The St-class of a microcapsule is deduced from the value of its product specific constant K_{-St}. A powder characterized by a K_{-St} constant comprised between 0 and 199 is classified in class St-1, whereas powders characterized by K_{-St} constant comprised between 200 and 299 or by a K_{-St} constant above 300 are classified respectively in classes St-2 and St-3. The K_{-St} parameter is measured by means of the ISO standard procedure ISO 6184/1 in a 20 l sphere apparatus. This equipment and the methods of measurement of K_{-St} are described in International standards, hereby included by reference (VDI Guideline 2263 part 1 : Dust Fires and Dust Explosions, Hazard Assessment - Protective Measures, Test Methods for the Determination of Safety Characteristics of Dusts, Beuth, Berlin, May 1990).

The solid capsules of the invention are also advantageously characterized by storage stability of at least 4 months at room temperature and standard humidity, meaning that the capsules remain free-flowing and do not form aggregates over this period.

The capsules obtained by the process of the present invention can optionally be coated by further applying on the surface of the capsules any known free-flowing agent such as native starch, for example using a Blendor/Mixer such as a Ribbon blendor.

The present invention further provides capsules obtainable and/or obtained by the method of the present invention.

More particularly, it relates to solid capsules containing ethanol, a carbohydrate, a salt and a coating provided by a powdering agent, these components being as defined above.

The present invention further provides a consumer product comprising the capsules of the invention. Such consumer products may be, for example, food products or beverage in a dry powder form. The capsules of the present invention are particularly useful in the formulation of tea powder, powdered soft drinks, soup mixes, sauces/gravy mixes and cake mixes.

The present invention also relates to a method for improving the storage stability of solid capsules comprising ethanol, the method comprising the steps of:
a) mixing a salt with ethanol, water and a carbohydrate to form an aqueous solution, suspension or emulsion,
b) dispersing the aqueous solution, suspension or emulsion obtained in step a) in the form of drops into a spraying tower,
c) introducing before, during and/or after step b) a powdering agent into the spraying tower so as to contact the powdering agent with the drops of the dispersed aqueous solution, suspension or emulsion to obtain a coating of powdering agent at the surface of the drops,
d) supplying a hot gas at a temperature comprised between 130 and 250°C into the spraying tower, and,
e) removing the powdering agent coated solid capsules from the spraying tower.

These steps are carried out as described above.

### Examples

The invention will now be described in further detail by way of the following Examples.

### Example 1

### Preparation of solid capsules comprising ethanol according to the invention

Solution A was prepared having the following ingredients.

**Table 1: Composition of Solution A**

| Ingredient | Amount [g] | Parts [%] | Parts on a dry basis [%] |
|---|---|---|---|
| Alcoholic flavour composition¹⁾ | 648 | 24.1 | 33.50 |
| Water | 756 | 28.1 | 0.00 |
| Carbohydrate²⁾ | 1200 | 44.7 | 62.10 |
| Potassium citrate | 84 | 3.1 | 4.40 |

| | | | |
|---|---|---|---|
| 1) Solution of flavours reminding of the flavour of edible alcohol at 2% in 98% of ethanol 2) Glucidex^{®} 29DE (corn syrup solids, origin: Roquette Frères) | | | |

The solution was prepared as follows:
A 50% salt solution was prepared by dissolving the potassium citrate into the same amount of water. Separately, the alcoholic flavour composition was mixed with the rest of the water in a closable container. The carbohydrate was then added slowly to the closable container already containing the flavour composition and water, while stirring. The container was then closed and the mixture was heated to 60°C. The solution was kept during 1 hour at 60°C until complete dissolution of the carbohydrate. The prepared salt solution was then added to the closable container already containing the other ingredients. The container was then closed and shaken until a clear solution was formed.

The solution was then spray-dried in a multi-stage dryer (MobilMinor, origin: NIRO). The Nitrogen inlet was set to a temperature ranging from 130 to 160°C and the outlet temperature was ranging between 70 and 80°C. Native starch was introduced in the dryer prior to the start of drying.

The explosive character of the capsules was measured with a 20 l sphere apparatus (see VDI Guideline 2263 part 1 : Dust Fires and Dust Explosions, Hazard Assessment - Protective Measures, Test Methods for the Determination of Safety Characteristics of Dusts, ISO standard procedure ISO 6184/1, Beuth, Berlin, May 1990). The K_{-St} constant was of 87. Thus, the capsules were attributed dust hazard class St-1.

The capsules were stored at room temperature and standard humidity during 4 months and remained free-flowing over the whole period.

### Example 2 (comparative)

### Preparation of solid capsules containing ethanol

Solution B was prepared having the following ingredients. The solution is the same as Solution A, except that is does not contain potassium citrate.

**Table 2: Composition of Solution B**

| Ingredient | Amount [g] | Parts [%] | Parts on a dry basis [%] |
|---|---|---|---|
| Alcoholic flavour composition¹⁾ | 108 | 25.7 | 35.1 |
| Water | 112 | 26.7 | 0.00 |
| Carbohydrate²⁾ | 200 | 47.6 | 64.9 |

| | | | |
|---|---|---|---|
| 1) Solution of flavours reminding of the flavour of edible alcohol at 2% in 98% of ethanol 2) Glucidex^{®} 29DE (corn syrup solids, origin: Roquette Frères) | | | |

The solution was prepared as follows:
The alcoholic flavour composition was mixed with the water in a closable container. The carbohydrate was then added slowly while mixing. The container was then closed and the mixture was heated to 60°C. The solution was kept during 1 hour at 60°C until complete dissolution of the carbohydrate. Capsules were then formed from this solution using a conventional spray-drying technique.

The solution was spray-dried in a bench top spray dryer (Model Buchi 290, Flawil, Switzerland). The air inlet was set to a temperature ranging from 130 to 160°C and the outlet temperature was ranging between 75 and 90°C.

The explosive character of the capsules was measured as described in Example 1. The K_{-St} constant was of 338. Thus, the capsules were attributed dust hazard class St-3.

The capsules were stored at room temperature and standard humidity during 4 months. The powder did not remain free-flowing and formed aggregates.

### Example 3

### Preparation of solid capsules comprising ethanol according to the invention

Solution C was prepared having the following ingredients.

**Table 3: Composition of Solution C**

| Ingredient | Amount [g] | Parts [%] | Parts on a dry basis [%] |
|---|---|---|---|
| Alcoholic flavour composition¹⁾ | 78.3 | 19.6 | 27.2 |
| Water | 98.5 | 28.8 | 0.00 |
| Carbohydrate²⁾ | 164.9 | 41.2 | 57.3 |
| Carbohydrate³⁾ | 31.3 | 7.8 | 10.9 |
| Potassium citrate | 27 | 3.4 | 4.7 |

| | | | |
|---|---|---|---|
| 1) Solution of flavours reminding of the flavour of edible alcohol at 2% in 98% of ethanol 2) Glucidex^{®} 18DE (Maltodextrin, origin: Roquette Frères) 3) Glucose | | | |

The solution was prepared using the method described in Example 1. It was then spray-dried using the method described in Example 1, except that the inlet and outlet temperature of the gas was ranging from respectively 145 to 160°C and 75 to 90°C.

The capsules were stored at room temperature and standard humidity during 4 months and remained free-flowing over the whole period.

### Example 4

### Preparation of solid capsules comprising ethanol according to the invention

Solution D is prepared having the following ingredients.

**Table 4: Composition of Solution D**

| Ingredient | Amount [g] | Parts [%] | Parts on a dry basis [%] |
|---|---|---|---|
| Alcoholic flavour composition¹⁾ | 78.3 | 19.6 | 27.2 |
| Water | 98.5 | 28.8 | 0.00 |
| Carbohydrate²⁾ | 164.9 | 41.2 | 57.3 |
| Carbohydrate³⁾ | 31.3 | 7.8 | 10.9 |
| Sodium citrate | 27 | 3.4 | 4.7 |

| | | | |
|---|---|---|---|
| 1) Solution of flavours reminding of the flavour of edible alcohol at 2% in 98% of ethanol 2) Glucidex 18DE (Maltodextrin, origin: Roquette Frères) 3) Glucose | | | |

The solution is prepared and then spray-dried using the method described in Example 3.

### Example 5

### Preparation of solid capsules comprising ethanol according to the invention

Solution E is prepared having the following ingredients.

**Table 5: Composition of Solution E**

| Ingredient | Amount [g] | Parts [%] | Parts on a dry basis [%] |
|---|---|---|---|
| Alcoholic flavour composition¹⁾ | 78.3 | 19.6 | 27.2 |
| Water | 98.5 | 28.8 | 0.00 |
| Carbohydrate²⁾ | 164.9 | 41.2 | 57.3 |
| Carbohydrate³⁾ | 31.3 | 7.8 | 10.9 |
| Sodium phosphate | 27 | 3.4 | 4.7 |

| | | | |
|---|---|---|---|
| 1) Solution of flavours reminding of the flavour of edible alcohol at 2% in 98% of ethanol 2) Glucidex 18DE (Maltodextrin, origin: Roquette Frères) 3) Glucose | | | |

The solution is prepared and then spray-dried using the method described in Example 3.

### Example 6

### Preparation of solid capsules comprising ethanol according to the invention

Solution F is prepared having the following ingredients.

**Table 6: Composition of Solution F**

| Ingredient | Amount [g] | Parts [%] | Parts on a dry basis [%] |
|---|---|---|---|
| Alcoholic flavour composition¹⁾ | 78.3 | 19.6 | 27.2 |
| Water | 98.5 | 28.8 | 0.00 |
| Carbohydrate²⁾ | 164.9 | 41.2 | 57.3 |
| Carbohydrate³⁾ | 31.3 | 7.8 | 10.9 |
| Potassium phosphate | 27 | 3.4 | 4.7 |

| | | | |
|---|---|---|---|
| 1) Solution of flavours reminding of the flavour of edible alcohol at 2% in 98% of ethanol 2) Glucidex 18DE (Maltodextrin, origin: Roquette Frères) 3) Glucose | | | |

The solution is prepared and then spray-dried using the method described in Example 3.

### Example 7

### Preparation of solid capsules comprising ethanol according to the invention

Solution G is prepared having the following ingredients.

**Table 7: Composition of Solution G**

| Ingredient | Amount [g] | Parts [%] | Parts on a dry basis [%] |
|---|---|---|---|
| Alcoholic flavour composition¹⁾ | 78.3 | 19.6 | 27.2 |
| Water | 98.5 | 28.8 | 0.00 |
| Carbohydrate²⁾ | 164.9 | 41.2 | 57.3 |
| Carbohydrate³⁾ | 31.3 | 7.8 | 10.9 |
| Sodium acetate | 27 | 3.4 | 4.7 |

| | | | |
|---|---|---|---|
| 1) Solution of flavours reminding of the flavour of edible alcohol at 2% in 98% of ethanol 2) Glucidex 18DE (Maltodextrin, origin: Roquette Frères) 3) Glucose | | | |

The solution is prepared and then spray-dried using the method described in Example 3.

### Example 8

### Preparation of solid capsules comprising ethanol according to the invention

Solution H is prepared having the following ingredients.

**Table 8: Composition of Solution H**

| Ingredient | Amount [g] | Parts [%] | Parts on a dry basis [%] |
|---|---|---|---|
| Alcoholic flavour composition¹⁾ | 78.3 | 19.6 | 27.2 |
| Water | 98.5 | 28.8 | 0.00 |
| Carbohydrate²⁾ | 164.9 | 41.2 | 57.3 |
| Carbohydrate³⁾ | 31.3 | 7.8 | 10.9 |
| Potassium acetate | 27 | 3.4 | 4.7 |

| | | | |
|---|---|---|---|
| 1) Solution of flavours reminding of the flavour of edible alcohol at 2% in 98% of ethanol 2) Glucidex 18DE (Maltodextrin, origin: Roquette Frères) 3) Glucose | | | |

The solution is prepared and then spray-dried using the method described in Example 3.

## Claims

1. A process for the preparation of solid capsules comprising ethanol, the process comprising the steps of :
a) mixing a salt with ethanol, water and a carbohydrate, which is a dextrin or a maltodextrin, to form an aqueous solution, suspension or emulsion, wherein the salt is present in an amount of at least 3% by weight, relative to the total weight of the solution, suspension or emulsion;
b) dispersing the aqueous solution, suspension or emulsion obtained in step a) in the form of drops into a spraying tower,
c) introducing before, during and/or after step b) a powdering agent into the spraying tower so as to contact the powdering agent with the drops of the sprayed aqueous solution, suspension or emulsion to obtain a coating of powdering agent at the surface of the drops,
d) supplying a hot gas at a temperature comprised between 130 and 250°C into the spraying tower, and,
e) removing the solid powdering agent coated capsules from the spraying tower,
wherein the salt is a citrate salt of potassium.

2. The process of any of the preceding claims, wherein the obtained solid capsules have an ethanol load of 20-40 wt.%.

3. The process according to any of the preceding claims, wherein the powdering agent is selected from the group consisting of starch, starch derivatives, talc, bentonite, silicon dioxide, calcium, magnesium, aluminium or potassium silicates, sodium, potassium or calcium aluminosilicates, calcium, sodium, or magnesium carbonates, calcium or magnesium phosphates, ferric ammonium citrate, microcrystalline cellulose and cellulose derivatives or fibers, aluminium, calcium, sodium, magnesium, potassium or ammonium salts of fatty acids, magnesium oxides, and mixtures comprising two or more of the aforementioned powdering agents.

4. Solid capsules comprising ethanol, a carbohydrate, which is a dextrin or a maltodextrin, a salt and a coating provided by a powdering agent, wherein the salt is a citrate salt of potassium, obtainable by the process according to any of claims 1-3.

5. The solid capsules according to claim 4, wherein the powdering agent is selected from the group consisting of starch, starch derivatives, talc, bentonite, silicon dioxide, calcium, magnesium, aluminium or potassium silicates, sodium, potassium or calcium aluminosilicates, calcium, sodium, or magnesium carbonates, calcium or magnesium phosphates, ferric ammonium citrate, microcrystalline cellulose and cellulose derivatives or fibers, aluminium, calcium, sodium, magnesium, potassium or ammonium salts of fatty acids, magnesium oxides, and mixtures comprising two or more of the aforementioned powdering agents.

6. A consumer product comprising the solid capsules according to claim 4.

7. A consumer product according to claim 6 which is a food product or a beverage in powder form.

8. A method for improving the storage stability of solid capsules comprising ethanol, the method comprising the steps of :
a) mixing a salt with ethanol, water and a carbohydrate, which is a dextrin or a maltodextrin, to form an aqueous solution, suspension or emulsion, wherein the salt is present in an amount of at least 3% by weight, relative to the total weight of the solution, suspension or emulsion;
b) dispersing the aqueous solution, suspension or emulsion obtained in step a) in the form of drops into a spraying tower,
c) introducing before, during and/or after step b) a powdering agent into the spraying tower so as to contact the powdering agent with the drops of the dispersed aqueous solution, suspension or emulsion to obtain a coating of powdering agent at the surface of the drops,
d) supplying a hot gas at a temperature comprised between 130 and 250°C into the spraying tower, and,
e) removing the powdering agent coated solid capsules from the spraying tower;
wherein the salt is a citrate salt of potassium.

## Patentansprüche

1. Verfahren für die Herstellung von festen Kapseln, umfassend Ethanol, wobei das Verfahren die Schritte umfasst:
a) Mischen eines Salzes mit Ethanol, Wasser und einem Kohlenhydrat, welches ein Dextrin oder ein Maltodextrin ist, um eine wässerige Lösung, Suspension oder Emulsion zu erzeugen, wobei das Salz in einem Anteil von mindestens 3 Gew.-% relativ zu dem Gesamtgewicht der Lösung, Suspension oder Emulsion vorhanden ist,
b) Dispergieren der wässerigen Lösung, Suspension oder Emulsion, erhalten in Schritt a), in der Form von Tropfen in einen Sprühturm,
c) Einführen vor, während und/oder nach Schritt b) eines Pudermittels in den Sprühturm, um das Pudermittel mit den Tropfen der gesprühten wässerigen Lösung, Suspension oder Emulsion in Kontakt zu bringen, um eine Beschichtung von Pudermittel auf der Oberfläche der Tropfen zu erhalten,
d) Zuführen eines heißen Gases mit einer Temperatur zwischen 130 und 250°C in den Sprühturm und
e) Entnehmen der festen, mit Pudermittel beschichteten Kapseln aus dem Sprühturm,
wobei das Salz ein Citratsalz von Kalium ist.

2. Verfahren gemäß einem der vorhergehenden Ansprüche, wobei die erhaltenen festen Kapseln eine Ethanolbeladung von 20-40 Gew.-% haben.

3. Verfahren gemäß einem der vorhergehenden Ansprüche, wobei das Pudermittel aus der Gruppe, bestehend aus Stärke, Stärkederivaten, Talk, Bentonit, Siliciumdioxid, Calcium-, Magnesium-, Aluminium- oder Kaliumsilicaten, Natrium-, Kalium- oder Calciumaluminosilicaten, Calcium-, Natrium-, oder Magnesiumcarbonaten, Calcium- oder Magnesiumphosphaten, Ferriammoniumcitrat, mikrokristalliner Cellulose und Cellulosederivaten oder -fasern, Aluminium-, Calcium-, Natrium-, Magnesium-, Kalium- oder Ammoniumsalzen von Fettsäuren, Magnesiumoxiden und Gemischen, umfassend zwei oder mehrere von den vorstehend erwähnten Pudermitteln, ausgewählt ist.

4. Feste Kapseln. umfassend Ethanol, ein Kohlenhydrat, welches ein Dextrin oder ein Maltodextrin ist, ein Salz und eine Beschichtung, bereitgestellt von einem Pudermittel, wobei das Salz ein Citratsalz von Kalium ist, erhältlich durch das Verfahren gemäß einem der Ansprüche 1-3.

5. Feste Kapseln gemäß Anspruch 4, wobei das Pudermittel aus der Gruppe, bestehend aus Stärke, Stärkederivaten, Talk, Bentonit, Siliciumdioxid, Calcium-, Magnesium-, Aluminium- oder Kaliumsilicaten, Natrium-, Kalium- oder Calciumaluminosilicaten, Calcium-, Natrium-, oder Magnesiumcarbonaten, Calciumoder Magnesiumphosphaten, Ferriammoniumcitrat, mikrokristalliner Cellulose und Cellulosederivaten oder -fasern, Aluminium-, Calcium-, Natrium-, Magnesium-, Kaliumoder Ammoniumsalzen von Fettsäuren, Magnesiumoxiden und Gemischen, umfassend zwei oder mehrere von den vorstehend erwähnten Pudermitteln, ausgewählt ist.

6. Verbraucherprodukt, umfassend die festen Kapseln gemäß Anspruch 4.

7. Verbraucherprodukt gemäß Anspruch 6, welches ein Nahrungsmittelprodukt oder ein Getränk in Pulverform ist.

8. Verfahren zum Verbessern der Lagerungsstabilität von festen Kapseln, umfassend Ethanol, wobei das Verfahren die Schritte umfasst:
a) Mischen eines Salzes mit Ethanol, Wasser und einem Kohlenhydrat, welches ein Dextrin oder ein Maltodextrin ist, um eine wässerige Lösung, Suspension oder Emulsion zu erzeugen, wobei das Salz in einem Anteil von mindestens 3 Gew.-% relativ zu dem Gesamtgewicht der Lösung, Suspension oder Emulsion vorhanden ist;
b) Dispergieren der wässerigen Lösung, Suspension oder Emulsion, erhalten in Schritt a), in der Form von Tropfen in einen Sprühturm,
c) Einführen vor, während und/oder nach Schritt b) eines Pudermittels in den Sprühturm, um das Pudermittel mit den Tropfen der dispergierten wässerigen Lösung, Suspension oder Emulsion in Kontakt zu bringen, um eine Beschichtung von Pudermittel auf der Oberfläche der Tropfen zu erhalten,
d) Zuführen eines heißen Gases mit einer Temperatur zwischen 130 und 250°C in den Sprühturm und
e) Entnehmen der mit Pudermittel beschichteten festen Kapseln aus dem Sprühturm;
wobei das Salz ein Citratsalz von Kalium ist.

## Revendications

1. Procédé de préparation de capsules solides comprenant de l'éthanol, le procédé comprenant les étapes consistant à:
a) mélanger un sel avec de l'éthanol, de l'eau, et un glucide, qui est une dextrine ou une maltodextrine, pour former une solution, suspension ou émulsion aqueuse, dans laquelle le sel est présent en une quantité d'au moins 3% en poids, rapporté au poids total de la solution, suspension ou émulsion;
b) disperser la solution, suspension ou émulsion aqueuse obtenue dans l'étape a) sous forme de gouttes dans une tour de pulvérisation,
c) introduire avant, pendant et/ou après l'étape b) un agent de poudrage dans la tour de pulvérisation de façon à mettre en contact l'agent de poudrage avec les gouttes de la solution, suspension ou émulsion aqueuse pulvérisée, pour obtenir un enrobage d'agent de poudrage à la surface des gouttes,
d) alimenter en gaz chaud à une température comprise entre 130 et 250°C la tour de pulvérisation, et,
e) retirer les capsules enrobées d'agent de poudrage solides de la tour de pulvérisation,
dans lequel le sel est un sel citrate de potassium.

2. Procédé selon l'une quelconque des revendications précédentes, dans lequel les capsules solides obtenues ont une charge en éthanol de 20-40% en poids.

3. Procédé selon l'une quelconque des revendications précédentes, dans lequel l'agent de poudrage est choisi dans le groupe constitué par l'amidon, les dérivés d'amidon, le talc, la bentonite, le dioxyde de silicium, les silicates de calcium, de magnésium, d'aluminium ou de potassium, les aluminosilicates de sodium, de potassium ou de calcium, les carbonates de calcium, de sodium ou de magnésium, les phosphates de calcium ou de magnésium, le citrate d'ammonium ferrique, la cellulose microcristalline et les dérivés ou fibres de cellulose, les sels d'aluminium, de calcium, de sodium, de magnésium, de potassium ou d'ammonium d'acides gras, les oxydes de magnésium, et les mélanges comprenant au moins deux des agents pulvérulents susmentionnés.

4. Capsules solides comprenant de l'éthanol, un glucide, qui est une dextrine ou une maltodextrine, un sel et un enrobage fourni par un agent de poudrage, où le sel est un sel citrate de potassium, pouvant être obtenues par le procédé selon l'une quelconque des revendications 1 à 3.

5. Capsules solides selon la revendication 4, dans lesquelles l'agent de poudrage est choisi dans le groupe constitué par l'amidon, les dérivés d'amidon, le talc, la bentonite, le dioxyde de silicium, les silicates de calcium, de magnésium, d'aluminium ou de potassium, les aluminosilicates de sodium, de potassium ou de calcium, les carbonates de calcium, de sodium ou de magnésium, les phosphates de calcium ou de magnésium, le citrate d'ammonium ferrique, la cellulose microcristalline et les dérivés ou fibres de cellulose, les sels d'aluminium, de calcium, de sodium, de magnésium, de potassium ou d'ammonium d'acides gras, les oxydes de magnésium, et les mélanges comprenant au moins deux des agents pulvérulents susmentionnés.

6. Produit de consommation comprenant les capsules solides selon la revendication 4.

7. Produit de consommation selon la revendication 6 qui est un produit alimentaire ou une boisson sous forme de poudre.

8. Procédé pour améliorer la stabilité au stockage de capsules solides comprenant de l'éthanol, le procédé comprenant les étapes consistant à:
a) mélanger un sel avec de l'éthanol, de l'eau, et un glucide, qui est une dextrine ou une maltodextrine, pour former une solution, suspension ou émulsion aqueuse, dans laquelle le sel est présent en une quantité d'au moins 3% en poids, rapporté au poids total de la solution, suspension ou émulsion;
b) disperser la solution, suspension ou émulsion aqueuse obtenue dans l'étape a) sous forme de gouttes dans une tour de pulvérisation,
c) introduire avant, pendant et/ou après l'étape b) un agent de poudrage dans la tour de pulvérisation de façon à mettre en contact l'agent de poudrage avec les gouttes de la solution, suspension ou émulsion aqueuse dispersée, pour obtenir un enrobage d'agent de poudrage à la surface des gouttes,
d) alimenter en gaz chaud à une température comprise entre 130 et 250°C la tour de pulvérisation, et
e) retirer les capsules solides enrobées d'agent de poudrage de la tour de pulvérisation,
dans lequel le sel est un sel citrate de potassium.
